## Europäisches Patentamt
## European Patent Office
## Office européen des brevets

(11) Numéro de publication: **0 150 148**
**B1**

(12) **FASCICULE DE BREVET EUROPÉEN**

(51) Int. Cl.⁴: **G 21 C 1/02**, G 21 C 13/06, G 21 C 19/20

(45) Date de publication du fascicule du brevet:
**08.06.88**

(21) Numéro de dépôt: **85400058.5**

(22) Date de dépôt: **14.01.85**

(54) Réacteur nucléaire à neutrons rapides muni d'une cellule centrale de manutention et d'une dalle caissonnée.

(30) Priorité: **19.01.84 FR 8400808**

(43) Date de publication de la demande:
**31.07.85 Bulletin 85/31**

(45) Mention de la délivrance du brevet:
**08.06.88 Bulletin 88/23**

(84) Etats contractants désignés:
**BE DE FR GB IT**

(73) Titulaire: **COMMISSARIAT A L'ENERGIE ATOMIQUE, 31/33, rue de la Fédération, F-75015 Paris (FR)**
Titulaire: **ELECTRICITE DE FRANCE Service National, 2, rue Louis Murat, F-75008 Paris (FR)**

(72) Inventeur: **Cransac, Jean- Pierre, 127, Village du Soleil, F-13540 Puyricard (FR)**
Inventeur: **Jogand, Patrick, La Biadouire, F-84240 La Tour d'Aigues (FR)**
Inventeur: **Sauvage, Michel, Parc Laurana, Bat. A1 Traverse Malakoff, F-13100 Aix en Provence (FR)**

(74) Mandataire: **Mongrédien, André, c/o BREVATOME 25, rue de Ponthieu, F-75008 Paris (FR)**

(56) Documents cité:
EP-A-0 058 583
CH-A-489 091
FR-A-2 154 277
GB-A-1 026 559
GB-A-1 067 866

NUCLEAR NEWS, vol. 15, no. 12, décembre 1972, pages 30-36, Hindsdale, Illinois, US; J. BARNARD et al.: "Development of the commercial breeders" GEAP-4418, vol. I, janvier 1963; "Liquid metal fast breeder reactor design study"
JOURNAL OF THE BRITISH NUCLEAR ENERGY SOCIETY, vol. 12, no. 4, octobre 1973, pages 357-365, Londres, GB; R.H. CAMPBELL: "Primary system design of sodium-cooled fast reactors"
KERNENERGIE, vol. 12, no. 5, mai 1969, pages 145-158, Berlin, DE; A.I. LEJPUNSKIJ et al.: "Das Kernkraftwerk BN-350"

## Description

La présente invention est relative à un réacteur nucléaire à neutrons rapides refroidi par un métal liquide, du type intégré, comprenant une cuve remplie de métal liquide et obturée en sa partie supérieure par une dalle caissonnée en béton armé servant au supportage des échangeurs et des pompes du circuit primaire.

Dans ce type de réacteurs, les assemblages constituant le coeur reposent sur le fond de la cuve ou sur sa périphérie par l'intermédiaire d'un sommier d'alimentation en métal liquide (généralement du sodium) et d'un platelage. Le sodium liquide est chauffé dans le coeur par la réaction de fission du combustible nucléaire avant de pénétrer dans un collecteur chaud placé au-dessus du coeur et dans des échangeurs de chaleur où il transfère ses calories au fluide (généralement du sodium) circulant dans des circuits secondaires. Le sodium primaire refroidi sortant du collecteur froid situé dans la partie inférieure des échangeurs est aspiré par des pompes primaires qui le réinjectent dans le sommier. Dans ce type de réacteur, les échangeurs et les pompes primaires sont généralement suspendus à la dalle obturant la cuve du réacteur. Il en est de même d'un certain nombre d'autres organes nécessaires au fonctionnement ou à la sûreté du réacteur.

Dans les réacteurs tels que Phénix ou Super-Phénix, les assemblages sont retirés périodiquement du coeur par un bras de transfert ou des ringards montés sur bouchons tournants, puis déchargés par un système de rampe et sas dans une enceinte de stockage voisine où ils dégagent leur puissance résiduelle pendant une durée suffisante à leur désactivation au moins partielle; ils subissent ultérieurement un traitement visant à séparer le matériau de gainage du matériau combustible pour la récupération de ce dernier.

Ce système de manutention est assez complexe. Sa mise en oeuvre est, en particulier, rendue délicate, pour les assemblages fissiles, par la présence de l'instrumentation qui est suspendue au Bouchon-Couvercle-Coeur (B.C.C.).

Le document FR-A-2 154 277 déposé le 26.01.71, par le Commissariat à l'Energie Atomique et la Société Creusot Loire, proposait de simplifier le système de manutention et de faciliter sa mise en oeuvre pour les assemblages fissiles, en munissant le réacteur d'une cellule étanche à l'intérieur de laquelle le B.C.C. pourrait être escamoté, libérant ainsi le dessus du coeur pour le passage d'un bras de manutention.

Ce concept de cellule étanche pour escamoter le B.C.C. avait d'ailleurs déjà été envisagé par le document GB-A-1 026 559 déposé par l'U.K.A.E.A., et avait été étudié sur une maquette du réacteur SEFOR aux USA (GEAP 5701, AEC Research and Development Report, March 1969).

Mais l'implantation d'une cellule de manutention sur la dalle d'un réacteur à neutrons rapides de type intégré n'a jamais été sérieusement envisagée car on estime généralement que sa réalisation conduirait, soit à un surdimensionnement du réacteur et, par conséquent à un surcoût, soit à une réduction de la puissance, à dimensions constantes. De plus, la réalisation de cette solution n'est possible que sur une dalle suffisamment rigide et résistante, ce qui n'est pas le cas de la dalle mécano-soudée des réacteurs Phénix et Super-Phénix.

Dans cet esprit, on citera cependant le document GB-A-1 087 866 qui décrit un réacteur nucléaire à neutrons rapides dans lequel une cellule de manutention est formée au-dessus de la dalle du réacteur et communique avec une cellule annexe disposée à côté de la cuve du réacteur par un couloir orienté radialement. Le transfert entre la cellule de manutention et la cellule annexe s'effectue au moyen d'une hotte suspendue à un pont roulant, puis placée sur un chariot guidé par des rails, dans le couloir radial. Cependant, il est clair que la structure décrite n'est pas transposable au cas d'une dalle mécano-soudée. De plus, la manutention entre le coeur et la cellule de manutention s'effectue ici de façon complexe, en passant par une zone de stockage provisoire formée directement en-dessous du coeur.

Par ailleurs, le document EP-A1-0 058 583 déposé par le Commissariat à l'Energie Atomique, propose une dalle caissonnée rigide et très résistante sans augmentation notable du coût.

La présente invention propose un réacteur nucléaire du type intégré muni d'une dalle caissonnée comportant un caisson central et un caisson radial en béton armé dans lesquels sont implantés des moyens de manutention et de transfert des assemblages du coeur.

De façon plus précise, il est proposé une cuve remplie de métal liquide, obturée en sa partie supérieure par une dalle présentant une ouverture centrale dans laquel le vient se loger un bouchon couvercle-coeur surplombant le coeur du réacteur comprenant des assemblages, et des ouvertures périphériques, disposées en couronne autour de l'ouverture centrale, traversées par des pompes et des échangeurs de chaleur, la tête de chaque éhangeur étant contenue dans un logement pratiqué dans l'épaisseur de la dalle, l'ouverture centrale étant surmontée d'une cellule de manutention apte à communiquer avec une cellule de transfert par au moins un couloir radial d'évacuation des assemblages débouchant directement dans la cellule de manutention, cette dernière et le couloir radial étant délimités par une enceinte, des moyens de manutention et d'évacuation étant prévus pour transporter les assemblages entre le coeur du réacteur et la cellule de transfert en passant par la cellule de manutention et par le couloir radial, caractérisé en ce que la dalle est une dalle caissonnée en béton armé comprenant une semelle inférieure dans laquelle est ménagée l'overture centrale a tête de chaque pompe traversant un logement pratiqué dans l'épaisseur de la dalle, la cellule de manutention est une cellule centrale et le couloir radial est placé entre deux logements et leur est adjacent, de telle sorte que ladite enceinte est constituée de caissons en béton armé constituant une partie de la dalle caissonnée, lesdits moyens de manutention et d'évacuation assurant directement le transport des assemblages entre le coeur et la cellule centrale de manutention, après enlèvement du bouchon-couvercle-coeur.

Selon un premier mode de réalisation de l'invention, lesdits moyens de manutention et d'évacuation comprennent une grue à plateau tournant et à flèche inclinable montée de façon à pouvoir se déplacer sur des rails dans ledit couloir radial.

Selon un deuxième mode de réalisation de l'invention, lesdits moyens de manutention et d'évacuation comprennent une poutre potence verticale montée de façon à pouvoir se déplacer dans la cellule centrale autour de l'ouverture centrale et dans le couloir radial sur au moins un rail, ladite poutre potence étant montée pivotante autour de son axe propre et supportant de façon coulissante un chariot sur lequel est articulé un bras de préhension autour d'un axe vertical. Dans ce cas, les moyens de manutention et d'évacuation peuvent s'effacer contre le caisson de la cellule centrale par rotation de la poutre potence autour de son axe propre et par rotation du bras de préhension autour dudit axe vertical.

De préférence, des moyens de manutention et des moyens de stockage du bouchon couvercle-coeur sont situés dans la partie supérieure de la cellule centrale à un niveau supérieur à celui des moyens de manutention et d'évacuation des assemblages.

Les moyens de manutention du bouchon couvercle-coeur peuvent comprendre notamment un système de treuils de levage, à chaîne ou câble, situé au-dessus de la cellule centrale, commandant le déplacement vertical du bouchon couvercle-coeur dans la cellule.

De même, les moyens de stockage du bouchon couvercle-coeur peuvent comprendre au moins trois butées escamotables implantées dans le caisson de la cellule centrale pour déterminer une position haute de stockage du bouchon couvercle-coeur.

De nombreuses autres caractéristiques additionnelles du réacteur nucléaire considéré apparaitront également au travers de la description qui suit, notamment de plusieurs exemples de réalisation du système de transfert des assemblages, donnés à titre indicatif et non limitatif, en référence aux dessins annexés sur lesquels:
- la figure 1 est une vue en coupe verticale d'un réacteur nucléaire selon l'invention, possédant une cellule de manutention intégrée au fût central de la dalle caissonnée,
- la figure 2 est une vue de dessus à grande échelle représentant une position de travail, et la position correspondant à l'effacement contre la paroi de la cellule de manutention, des organes de manutention des assemblages du réacteur de la figure 1,
- les figures 3a et 3b sont des vues partielles en coupe verticale, respectivement de dessus, du réacteur nucléaire selon l'invention, illustrant le premier mode d'évacuation des assemblages vers un poste de transfert secondaire, cette évacuation étant réalisée par des moyens de transfert se déplaçant entre la cellule centrale et un couloir radial de transfert la prolongeant, et
- les figures 4a et 4b sont des vues comparables aux figures 3a et 3b illustrant le deuxième mode d'évacuation des assemblages utilisant une grue placée en permanence dans le couloir radial de transfert.

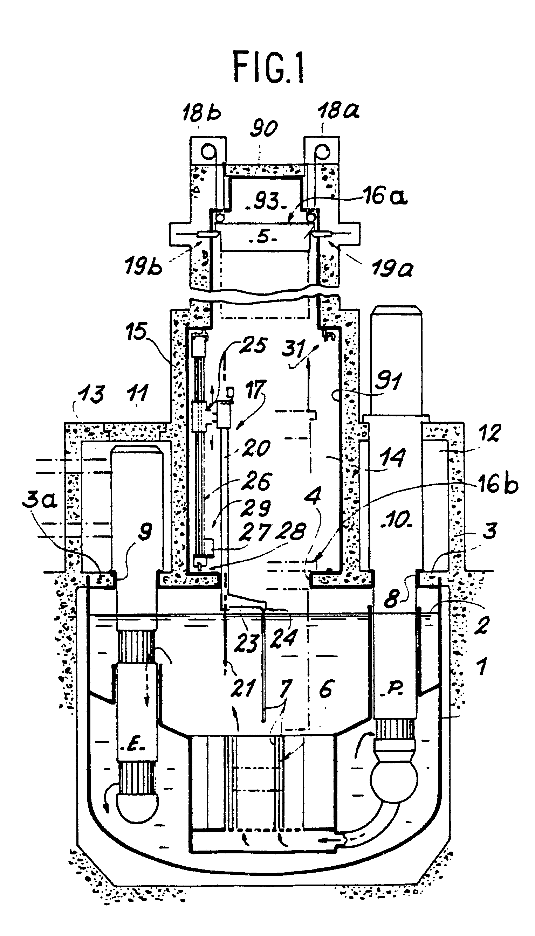

Le réacteur nucléaire à neutrons rapides selon la présente invention comprend, comme l'illustre la figure 1, une cuve 1 remplie de métal liquide 2 (généralement du sodium liquide) obturée en sa partie supérieure par une dalle caissonnée 3 réalisée en béton armé. La semelle inférieure 3a de la dalle caissonnée 3 comporte plusieurs ouvertures dont l'une est centrale 4 et les autres 8, 9 sont périphériques et disposées en couronne autour de l'ouverture centrale 4. Les ouvertures périphériques 8 et 9 par lesquelles sont respectivement suspendus au moins une pompe 10 et au moins un échangeur de chaleur 11 sont surmontées de logements 12 et 13 pratiqués dans l'épaisseur de la dalle 3. Ces logements sont conçus de façon à enfermer les têtes des pompes et des échangeurs. L'ouverture centrale 4 surplombe le coeur 6 du réacteur, formé d'assemblages 7. Cette ouverture 4 est elle-même surmontée d'une cellule centrale de manutention 14 étanche délimitée par un caisson 15 en béton armé, dont la paroi latérale cylindrique constitue dans sa partie basse le fût central de la dalle 3.

Selon l'invention, la dalle caissonnée 3 ne comporte pas de bouchon tournant, mais seulement un bouchon couvercle-coeur 5 venant se loger dans l'ouverture centrale 4 formée dans la semelle inférieure 3a. Le caisson de manutention 15 en béton armé peut être doublé sur sa face interne d'une peau métallique 91. Il est fermé en son sommet par un bouchon amovible 90 qui permet l'accès à un sas 93 permettant les opérations de maintenance du réacteur.

A l'intérieur de la cellule 14, on distingue deux niveaux superposés:
- un niveau supérieur occupé par les organes de stockage et de manutention du bouchon couvercle-coeur 5,
- un niveau inférieur occupé par les organes de manutention et d'évacuation des assemblages 7.

La conception de ces niveaux autorise, après effacement des organes de manutention des assemblages, le déplacement vertical du bouchon couvercle-coeur 5 entre une position haute 16a correspondant à son poste de stockage pendant la phase de manutention, et une position basse 16b qu'il occupe normalement lors du fonctionnement du réacteur.

Parmi les organes de manutention du bouchon-couvercle-coeur 5, on distingue un système de treuils de levage 18a, b, à chaîne ou analogue, monté sur la partie supérieure externe du caisson 15, pour commander le déplacement vertical du bouchon couvercle-coeur 5 dans la cellule 14.

Les organes de stockage du bouchon couvercle-coeur comprennent un système de verrouillage assuré par au moins trois butées escamotables 19a, 19b implantées dans la paroi de la cellule 14 au niveau de la position haute 16 du bouchon couvercle-coeur 5.

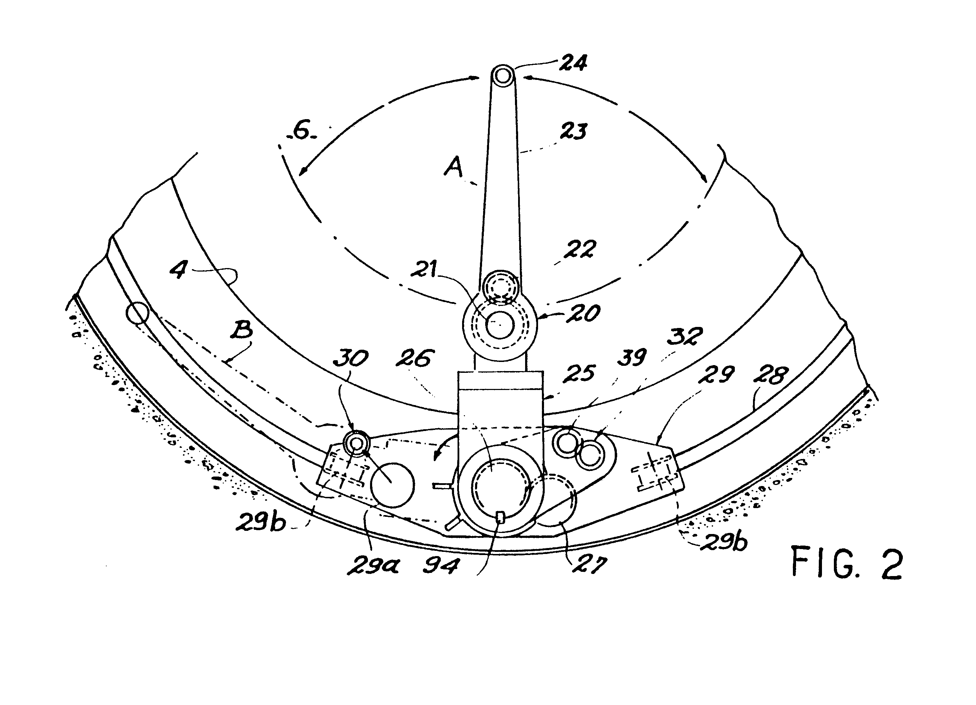

Comme l'illustrent les figures 1 et 2, les moyens de manutention 17 des assemblages 7, situés dans la partie inférieure de la cellule 14, comprennent un bras vertical 20 monté pivotant autour d'un axe vertical 21, le pivotement du bras 20 autour de l'axe 21 étant commandé par un moteur 22. Le bras 20 porte à son extrémité inférieure un ringard horizontal 23 muni lui-même à son extrémité d'un grappin 24 apte à saisir les assemblages 7. L'axe 21 est supporté par un chariot 25 qui coulisse le long d'une poutre potence verticale 26 par l'intermédiaire d'une tige filetée 39 traversant le chariot 25 et entraînée en rotation par un moteur de commande 32. La poutre potence 26 est supportée de façon pivotante autour de son axe propre par deux chariots 29 munis de galets 29b roulant sur au moins deux rails annulaires 28, 31; le rail 28 est situé sur le plancher de la cellule 14; le rail 31 est disposé verticalement au-dessus de lui dans la partie haute de la partie inférieure de manutention de la cellule 14.

La rotation de la poutre 26 autour de son axe propre est commandée par un moteur de commande 27. Cette rotation entraine celle du chariot 25, par l'intermédiaire d'une clavette 94. Le déplacement des chariots 29 le long des rails 28, 31 est commandé par un moteur 29a, par l'intermédiaire d'un renvoi d'angle 30 qui vient entraîner en rotation l'un des galets 29b du chariot inférieur 29. La structure qui vient d'être décrite permet de positionner le grappin 24 au-dessus de n'importe quel assemblage 7 contenu dans le coeur 6; elle permet en outre de dégager totalement l'accès au coeur et ainsi de rendre possible la manoeuvre du bouchon couvercle-coeur 5.

Sur la figure 2, sont représentées en A et B deux configurations possibles des organes de manutention des assemblages venant d'être décrits.

La configuration A, en trait plein, représente l'une des nombreuses configurations des organes en cours de manutention: il s'agit de la configuration pour laquelle le grappin 24 est au centre du coeur 6 du réacteur.

La configuration B, dessinée en traits mixtes, illustre l'effacement de ces mêmes organes contre la paroi de la cellule 14, lequel effacement rend possible le déplacement vertical du bouchon couvercle-coeur 5 le long de la cellule 14. Le passage de la configuration B à la configuration A s'effectue par rotation de la poutre potence 26 autour de son axe de pivotement et par rotation du bras autour de son axe 21.

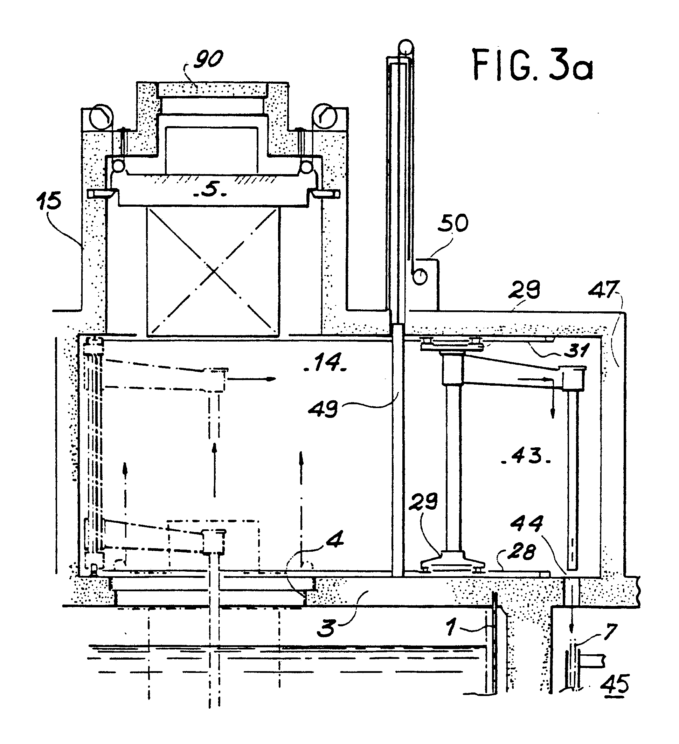

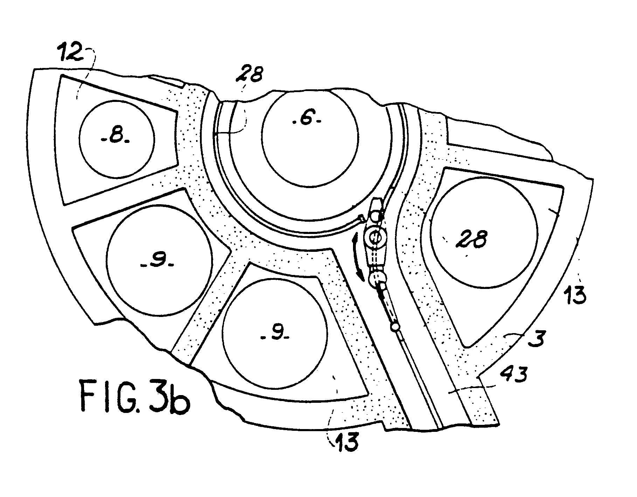

Les figures 3a et 3b représentent l'évacuation des assemblages 7 vers un poste de transfert selon une première variante de l'invention.

Comme l'illustrent les figures 3a et 3b, les assemblages 7 sont évacués vers un poste de transfert externe 45 (figure 3a) par les organes de manutention placés dans la cellule 14. A cet effet, la cellule 14 se prolonge par un couloir de transfert latéral ou radial 43 communiquant directement avec la cellule 14 et délimité par un caisson en béton armé 47 intégré sur au moins une partie de sa hauteur à la dalle caissonnée 3. Le couloir 43 est situé radialement entre deux des logements 12, 13 formés dans la partie périphérique de la dalle et il communique à son extrémité externe avec la cellule de transfert 45 par un orifice d'évacuation 44. Comme l'illustre en particulier la figure 3b, le transfert des assemblages entre le coeur et l'orifice d'évacuation 44 est effectué en totalité par le dispositif de manutention précédemment décrit A cet effet, les rails 28 et 31 se prolongent à l'intérieur du couloir 43 afin de guider les chariots 29 tout au long de leur déplacement. En fonctionnement, le couloir 43 est normalement isolé de la cellule 14 par une porte 49 manoeuvrée par un treuil 50.

Le déchargement et le chargement directs du coeur à travers l'orifice central 4 du bouchon couvercle-coeur 5 présentent l'avantage de réduire notablement la hauteur du réacteur; il n'est pas nécessaire en effet de prévoir une hauteur au moins égale à la longueur d'un assemblage entre le coeur et la dalle comme dans les réacteurs intégrés de conception classique, dans lesquels l'évacuation des assemblages 7 s'effectue par une rampe inclinée.

Cette configuration présente également l'avantage de ne pas augmenter le diamètre du réacteur, puisque la largeur du couloir de transfert 43 est très faible.

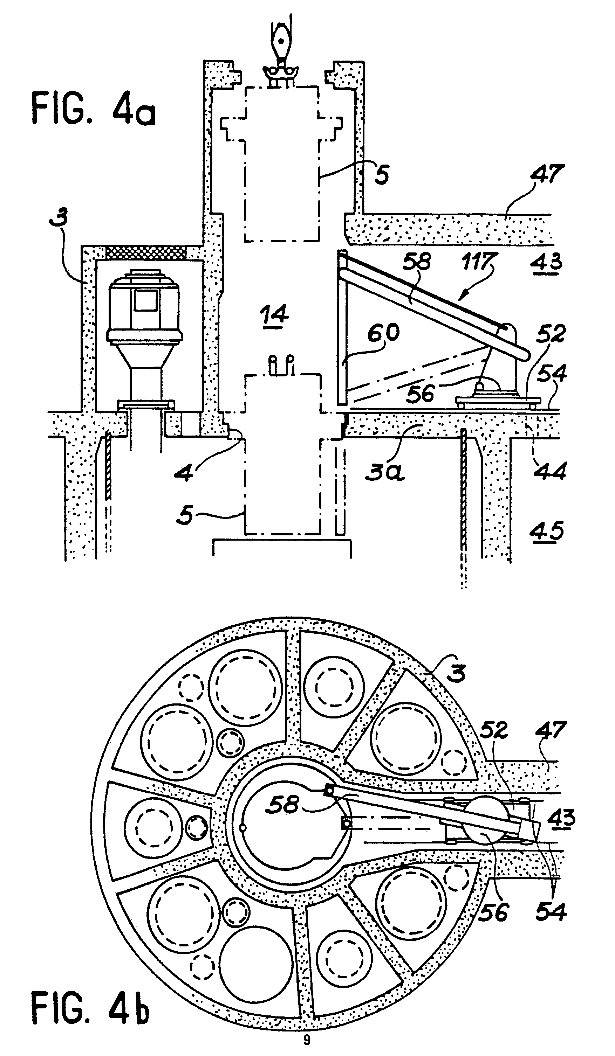

La variante de réalisation représentée sur les figures 4a et 4b présente les mêmes avantages que la précédente, puisqu'elle utilise également un couloir d'évacuation latéral ou radial 43 communiquant directement avec la cellule de manutention 14 et délimité par un caisson en béton armé 47 faisant partie intégrante de la dalle caissonnée 3. Comme dans le mode de réalisation précédemment décrit, le couloir 43 traverse radialement la dalle entre deux des logements 12, 13 de celle-ci, pour mettre en communication la cellule 14 avec une cellule de transfert externe 45 par un orifice d'évacuation 44.

La variante de réalisation des figures 4a et 4b se distingue de la variante des figures 3a et 3b par les moyens de manutention qui sont ici constitués par une grue 117. Cette grue comprend un chariot 52 roulant sur des rails 54 autorisant le déplacement radial du chariot sur le plancher du caisson 47, qui constitue également la semelle inférieure 3a de la dalle 3. Le chariot 52 supporte un plateau tournant 56 sur lequel est articulée, autour d'un axe horizontal, une flèche inclinable 58. Par un système du type parallélogramme déformable, un tube guide 60 est monté à l'extrémité de la flèche 58 de façon à rester en position verticale quelle que soit l'inclinaison de la flèche. Un chariot portant un grappin se déplace dans le tube guide afin de venir saisir un assemblage lorsqu'il est en position basse (traits mixtes sur la figure 4a) et afin d'escamoter ensuite cet assemblage dans le tube guide pour le transporter jusqu'à la cellule de transfert. Ce transport est effectué en remontant la flèche 58 (trait plein sur la figure 4a) puis en déplaçant le chariot 52 sur les rails 54 afin d'amener le tube guide 60 au-dessus de l'orifice 44 débouchant dans la cellule de transfert 45. Comme l'illustre la figure 4b, le plateau tournant 56 permet d'accéder à tous les assemblages contenus dans le coeur du réacteur.

Bien entendu, on pourrait prévoir deux couloirs comparables au couloir 43 afin de réaliser simultanément l'évacuation des assemblages usés et l'introduction des assemblages neufs.

**Revendications**

1. Réacteur nucléaire à neutrons rapides comprenant une cuve (1) remplie de métal liquide (2), obturée en sa partie supérieure par une dalle (3) présentant une ouverture centrale (4) dans laquelle vient se loger un bouchon couvercle-coeur (5) surplombant le coeur (6) du réacteur comprenant des assemblages (7), et des ouvertures périphériques (8, 9), disposées en couronne autour de l'ouverture centrale (4), traversées par des pompes (10) et des échangeurs de chaleur (11), la tête de chaque échangeur (11) étant contenue dans un logement (13) pratiqué dans l'épaisseur de la dalle (3), l'ouverture centrale étant surmontée d'une cellule de manutention (14) apte à communiquer avec une cellule de transfert (45) par au moins un couloir radial (43) d'évacuation des assemblages débouchant directement dans la cellule de manutention (14), cette dernière et le couloir radial (43) étant délimités par une enceinte, des moyens de manutention et d'évacuation (17, 117) étant prévus pour transporter les assemblages (7) entre le coeur (6) du réacteur et la cellule de transfert (45) en passant par la cellule de manutenion (14) et par le couloir radial (43), caractérisé en ce que la dalle (3) est une dalle caissonnée en béton armé comprenant une semelle inférieure (3a) dans laquelle est ménage l'ouverture centrale (4) a tête de chaque pompe (10) traversant un logement (12) pratiqué dans l'épaisseur de la dalle (3), la cellule de manutention (14) est une cellule centrale et le couloir radial (43) est placé entre deux logements (12, 13) et leur est adjacent, de telle sorte que ladite enceinte est constituée de caissons (15, 47) en béton armé constituant une partie de la dalle caissonnée, lesdits moyens de manutention et d'évacuation (17, 117) assurant directement le transport des assemblages (7) entre le coeur (6) et la cellule centrale de manutention (14), après enlèvement du bouchon-couvercle-coeur (5).

2. Réacteur nucléaire selon la revendication 1, caractérisé en ce que lesdits moyens de manutention et d'évacuation comprennent une grue (117) à plateau tournant (56) et à flèche inclinable (58) montée de façon à pouvoir se déplacer sur des rails (54) dans ledit couloir radial (43).

3. Réacteur nucléaire selon la revendication 1, caractérisé en ce que lesdits moyens de manutention et d'évacuation (17) comprennent une poutre potence verticale (26) montée de façon à pouvoir se déplacer dans la cellule centrale (14), autour de l'ouverture centrale (4) et dans le couloir radial (43) sur au moins un rail (28, 31), ladite poutre potence (26) étant montée pivotante autour de son axe propre et supportant de façon coulissante un chariot (25) sur lequel est articulé un bras de préhension (23) autour d'un axe vertical (21).

4. Réacteur nucléaire selon la revendication 3, caractérisé en ce que lesdits moyens de manutention et d'évacuation (17) peuvent s'effacer contre le caisson (15) de la cellule centrale (14) par rotation de la poutre potence (26) autour de son axe propre et par rotation du bras de préhension (23) autour dudit axe vertical (21).

5. Réacteur nucléaire selon l'une quelconque des revendications 1 à 4, caractérisé en ce que des moyens de manutention (18a, 18b) et des moyens de stockage (19a, 19b) du bouchon couvercle-coeur (5) sont situés dans la partie supérieure de la cellule centrale (14) à un niveau supérieur à celui des moyens de manutention et d'évacuation (17, 117) des assemblages.

6. Réacteur nucléaire selon la revendication 5, caractérisé en ce que les moyens de manutention du bouchon couvercle-coeur (5) comprennent un système de treuils (18a, 18b) de levage, à chaîne ou analogue, situé au-dessus de la cellule centrale (14) et commandant le déplacement vertical du bouchon couvercle-coeur (5) dans la cellule centrale (14).

7. Réacteur nucléaire selon l'une quelconque des revendications 5 et 6, caractérisé en ce que les moyens de stockage du bouchon couvercle-coeur (5) comprennent au moins trois butées escamotables (19a, 19b) implantées dans le caisson (15) de la cellule centrale (14) en sa partie supérieure, pour déterminer une position haute de stockage (16a) du bouchon couvercle-couer (5).

8. Réacteur nucléaire selon l'une quelconque des revendications 1 à 7, caractérisé en ce que le couloir radial (43) communique avec la cellule de transfert (45) par au moins un orifice (44) d'évacuation des assemblages (7).

9. Réacteur nucléaire selon l'une quelconque des revendications 1 à 8, caractérisé en ce que la cellule centrale (14) de manutention est obturée par un couvercle amovible (90).

**Claims**

1. Fast neutron nuclear reactor having a vessel (1) filled with liquid metal (2) and sealed in its upper part by a slab (3) having a central opening (4), in wich is located a plug-cover-core (5) overhanging the core (6) of the reactor and incorporating assemblies 7, as well as peripheral openings (8, 9) arranged in ring-like manner around the central opening (4), traversed by pumps (10) and heat exchangers (11), the head of each exchanger (11) being contained in a recess (13) made in the thickness of slab (3), the central opening being surmounted by a handling cell (14) able to communicate with a transverse cell (45) by at least one radial passage (43) for the discharge of the assemblies issuing directly into the handling cell (14), the latter and the radial passage (43) being defined by an enclosure, handling and discharge means (17, 117) being provided for transferring the assemblies (7) between the reactor core (6) and the transverse cell (45), whilst passing through the handling cell (14) and the radial passage (43), characterized in that the slab (3) is a boxed reinforced concrete slab having a lower plate (3a) in wich is provided the central opening (4), the head of each pump (10) traversing a recess (12) made in the thickness of slab (3), the handling cell (14) being a central cell and the radial passage (43) is placed between two recesses (12, 13) and is adjacent thereto, in such a way that said enclosure is constituted by reinforced concrete boxed (15, 47) constituting part of the boxell slab, said handling and discharge means (17, 117) directly ensuring the conveying of the assembly (7) between core (6) and the central handling cell (14) following the removal of the plug-cover-core (5).

2. Nuclear reactor according to claim 1, characterized in that the handling and discharge means comprise a crane (117) with a rotary plate (56) and an inclinable jib (58) mounted so as to be displaceable on rails (54) in said radial passage (43).

3. Nuclear reactor according to claim 1, characterized in that said handling and discharge means (17) comprise a vertical beam (26), mounted in such a way that it can be displaced in the central cell (14) about the central opening (4) and in the radial passage (43) on at least one rail (28, 31), said beam (26) being mounted so as to pivot about its own axis and supports in sliding manner a carriage (25) on wich a gripping arm (23) is articulated about a vertical shaft (21).

4. Nuclear reactor according to claim 3, characterized in that the handling and discharge means (17) can be collapsed against the box (15) of the central cell (14) by rotating the beam (26) about its own axis and by rotating the gripping arm (23) about the vertical shaft (21).

5. Nuclear reactor according to any one of the claims 1 to 4, characterized in that the handling means (18a, 18b) and storage means (19a, 19b) of the plug-cover-core (5) are located in the upper part of the central cell (14) at a level higher than that of the handling and discharge means (17, 117) for the assemblies.

6. Nuclear reactor according to claim 5, characterized in that the means for handling the plug-cover-core (5) comprise a system of winches (18a, 18b) operated by a chain or the like, positioned above the central cell (14) and controlling the vertical displacement of the plug-cover-core (5) within tie central cell (14).

7. Nuclear reactor according to either of the claims 5 and 6, characterized in that tie storage means of the plug-cover-core (5) comprise at least three retractable abutments (19a, 19b) installed in the box (15) on the upper part of the central cell (14), in order to define an upper storage position (16a) of tie plug-cover-core (5).

8. Nuclear reactor according to any one of the claims 1 to 7, characterized in that the radial passage (43) is linked with the transfer cell (45) by at least one opening (44) for the discharge of the assemblies (7).

9. Nuclear reactor according to any one of the claims 1 to 8, characterized in that the central handling cell (14) is sealed by a detachable cover (90).

**Patentansprüche**

1. Schneller Kernreaktor mit einem mit Flüssigmetall (2) gefüllten Behälter (1), der an seinem oberen Abschnitt mit einer Platte (3) verschlossen ist, die eine Mittelöffnung (4), in der ein den Brennstäbe (7) aufweisenden Reaktorkern (6) überdeckender Kerndeckel (5) anzuordnen ist, und Umfangsöffnungen (8, 9) aufweist, die als Kranz um die Mittelöffnung (4) angeordnet und von Pumpen (10) und Wärmetauschern (11) durchquert sind, wobei der Kopf von jedem Tauscher (11) in einer in der Dicke der Platte (3) ausgebildeten Aufnahme (13) enthalten ist, die Mittelöffnung von einer Transportkammer (14) überdeckt ist, die mit einer Überführungskammer (45) durch wenigstens einen radialen Austragsgang (43) für die Brennstäbe verbunden werden kann, welche unmittelbar in die Transportkammer (14) mündet, wobei diese Letztere und der radiale Gang (43) durch eine Umhüllung abgegrenzt sind und Mittel (17, 117) für den Transport und zum Austragen vorgesehen sind, um die Brennstäbe (7) zwischen dem Reaktorkern (6) und der Überführungskammer (45) durch die Transportkammer (14) und den radialen Gang (43) hindurch zu transportieren, dadurch gekennzeichnet, daß die Platte (3) eine Kassettenplatte aus Stahlbeton ist, die eine untere Platte (3a) aufweist, in der die Mittelöffnung (4) ausgebildet ist, der Kopf von jeder Pumpe (10) eine in der Dicke der Platte (3) ausgebildete Aufnahme (12) durchquert, die Transportkammer (14) eine mittige Kammer ist und der radiale Gang (43) zwischen zwei Aufnahmen (12, 13) angeordnet und innen benachbart ist derart, daß die genannte Umhüllung von den Kassetten (15, 47) aus Stahlbeton gebildet ist, die einen Teil der Kassettenplatte bilden, die genannten Mittel (17, 117) für den Transport und zum Austragen unmittelbar den Transport der Brennstäbe (7) zwischen dem Kern (6) und der mittigen Transportkammer (14) nach dem Anheben des Kerndeckels (5) sicherstellen.

2. Kernreaktor nach Anspruch 1, <u>dadurch gekennzeichnet</u>, daß die genannten Mittel für den Transport und zum Austragen einen Kran (117) mit einer Drehplatte (56) und einem neigbaren Ausleger (58) umfassen, der derart angebracht ist, daß er auf Schienen (54) in dem genannten radialen Gang (43) verschoben werden kann.

3. Kernreaktor nach Anspruch 1, <u>dadurch gekennzeichnet</u>, daß die genannten Mittel für den Transport und zum Austragen (17) einen vertikalen Träger (26) umfassen, der derart angebracht ist, daß er in der mittigen Kammer (14) um die Mittelöffnung (4) herum und in dem radialen Gang (43) auf wenigstens einer Schiene (28, 31) verschoben werden kann, wobei der genannte Träger (26) um seine eigene Achse herum verschwenkbar angebracht ist und verschiebbar einen Schlitten (25) trägt, an dem ein Greifarm (23) um eine vertikale Achse (21) ausschwenkbar ist.

4. Kernreaktor nach Anspruch 3, <u>dadurch gekennzeichnet</u>, daß die genannten Mittel für den Transport und zum Austragen (17) an die Kassette (15) der mittigen Kammer (14) durch Drehen des Trägers (26) um seine eigene Achse und durch Drehen des Greifarms (23) um die genannte vertikale Achse (21) zurückgestellt werden können.

5. Kernreaktor nach irgendeinem der Ansprüche 1 bis 4, <u>dadurch gekennzeichnet</u>, daß sich Transportmittel (18a, 18b) und Lagerungsmittel (19a, 19b) für den Kerndeckel (5) in dem oberen Abschnitt der mittigen Kammer (14) auf einer Höhe befinden, die höher als diejenige der Mittel (17, 117) für den Transport und zum Austragen der Brennelemente ist.

6. Kernreaktor nach Anspruch 5, <u>dadurch gekennzeichnet</u>, daß die Transportmittel für den Kerndeckel (5) ein Hubwindensystem (18a, 18b) mit Kette oder ähnlichem umfassen, welches sich oberhalb der mittigen Kammer (14) befindet und die vertikale Bewegung des Kerndeckels (5) in der mittigen Kammer (14) steuert.

7. Kernreaktor nach irgendeinem der Ansprüche 5 oder 6, <u>dadurch gekennzeichnet</u>, daß die Lagerungsmittel für den Kerndeckel (5) wenigstens drei einziehbare Widerlager umfassen, die in der Kassette (15) der mittleren Kammer (14) in ihrem oberen Abschnitt angebracht sind, um eine obere Lagerungsposition (16a) des Kerndeckels (5) festzulegen.

8. Kernreaktor nach irgendeinem der Ansprüche 1 bis 7, <u>dadurch gekennzeichnet</u>, daß der radiale Gang (43) mit der Überführungskammer (45) über wenigstens eine Öffnung (44) zum Austragen der Brennstäbe (7) verbunden ist.

9. Kernreaktor nach irgendeinem der Ansprüche 1 bis 8, <u>dadurch gekennzeichnet</u>, daß die mittige Kammer (14) für den Transport mit einem entfernbaren Deckel (90) verschlossen ist.

# FIG.1

FIG. 2

FIG. 3a

FIG. 3b

FIG. 4a

0 150 148

FIG. 4b